(19) **Europäisches Patentamt**
**European Patent Office**
**Office européen des brevets**

(11) Publication number: **0 245 395 B1**

(12) # EUROPEAN PATENT SPECIFICATION

(45) Date of publication of patent specification:
**27.02.91 Bulletin 91/09**

(51) Int. Cl.⁵: **H02P 7/622**

(21) Application number: **86906795.9**

(22) Date of filing: **07.11.86**

(86) International application number:
**PCT/DK86/00124**

(87) International publication number:
**WO 87/03151 21.05.87 Gazette 87/11**

(54) **CONTROL CIRCUIT.**

(30) Priority: **07.11.85 DK 5126/85**

(43) Date of publication of application:
**19.11.87 Bulletin 87/47**

(45) Publication of the grant of the patent:
**27.02.91 Bulletin 91/09**

(84) Designated Contracting States:
**AT BE CH DE FR GB IT LI LU NL SE**

(56) References cited:
**DE-A- 2 704 443**
**DE-B- 2 303 803**
**US-A- 3 443 121**

(73) Proprietor: **SUPPLY-TEAM APS**
**Mosede Hojvej 47**
**DK-2670 Greve Strand (DK)**

(72) Inventor: **SEIER, William**
**Benedikte Allé 14**
**DK-2670 Greve Strand (DK)**

(74) Representative: **Koepsell, Helmut, Dipl.-Ing.**
**Mittelstrasse 7**
**D-5000 Köln 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a circuit for controlling the speed of an electric motor, particularly a shaded pole motor, in accordance with a control voltage and including a ramp generator for generation of a sawtooth voltage, a comparison circuit with two inputs which are supplied with the control voltage and the sawtooth voltage, respectively, a trigger circuit the input of which is connected to the output of the comparison circuit and a triac connected in series with the electric motor, the control electrode of said triac being connected to the trigger circuit.

Such a circuit is known e.g. from US-A-3 443 121. This circuit may for instance be used to control a heating element or the speed of a fan in accordance with e.g. a temperature as the said control voltage can thus be formed by means of a voltage divider consisting of a fixed resistor and a temperature-dependent resistor. The comparison circuit controls O-passage/not-O-passage impulses to the triac by scanning the sawtooth voltage at one input and scanning a temperature-dependent threshold value at the other input.

A control circuit of the above-mentioned kind is not suitable for control of shaded pole motors as such motors and other asynchronous motors have a greatly varying torque which is very low at slow speeds and high at optimum motor speed.

According to the invention this disadvantage is avoided by the output of the comparison circuit being connected to a control input of the ramp generator, and by the generator being ar ranged to supply a steep ramp when the output status of the comparison circuit is at low level and a slightly less inclined ramp when the output status of the comparison circuit is at high level.

By this embodiment a double ramp system is used, the comparison circuit controlling the O-passage as well as the ramp generator, so that the comparison circuit at low level supplies a steep ramp and at high level a slightly less inclined ramp.

In what follows, the invention is explained in further detail in connection with the drawing where

Fig. 1 shows schematically a block diagram of a known control circuit,

Fig. 2 graphic representations of voltages in the known circuit,

Fig. 3 schematically a block diagram of a control circuit according to the invention, and

Fig. 4 graphic representations of voltages in the circuit according to Fig. 1.

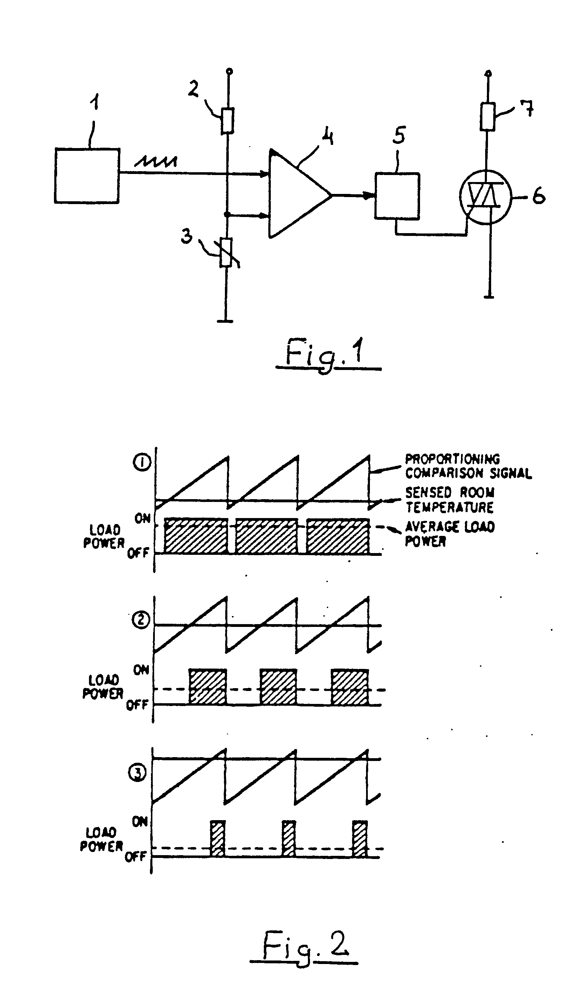

The control circuit shown in Fig. 1 includes a ramp genrator 1 generating a sawtooth voltage, a voltage divider consisting of a fixed resistor 12 and a temperature-dependent resistor 3 producing a temperature-dependent control voltage, a comparison circuit 4 whose two inputs are supplied with the sawtooth voltage and the control voltage, respectively, a trigger circuit 5, the input of which is supplied with the output signal of the comparison circuit 4, and a triac 6 connected in series with a load 7, for instance a heating element to be controlled, the control electrode of the triac being connected to the trigger circuit 5.

Fig. 2 is graphic representations of the sawtooth voltage, the control voltage and the voltage across the load at different temperatures. In dotted line is also shown the load power which is lowest when the temperature and hence the control voltage is highest.

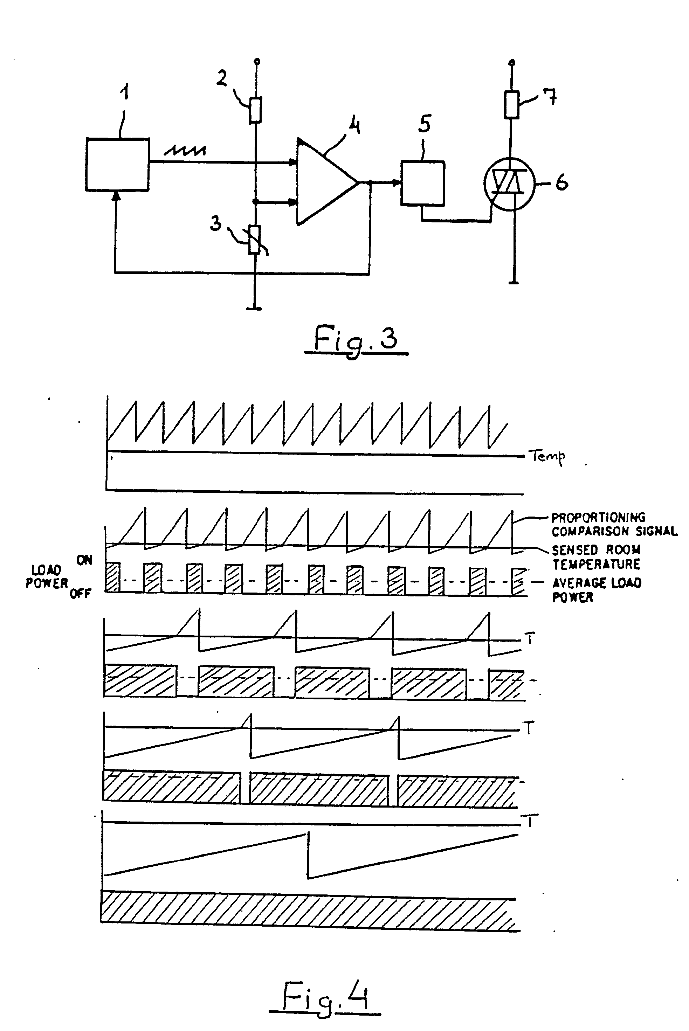

Fig. 3 shows the control circuit of Fig. 1 with the modifications which are made according to the present invention. The ouput signal from the comparison circuit 4 is in this case applied not only the trigger circuit 5 but also the ramp generator 1 which is hereby controlled in such a way that the ramp inclination has a first value when the output status of the comparison circuit is at low level and a second value when the output status of the comparison circuit is at high level.

The result is the voltage sequences suggested in Fig. 4, and where the ramp inclination is relatively small when the motor 7 is ON and relatively steep when the motor 7 is OFF. Through a suitable dimensioning of circuit components the coefficient of inclination of the two ramps can be adapted to the individual motor.

## Claims

1. A circuit for controlling the speed of an electric motor, particularly a shaded pole motor, in accordance with a control voltage and including a ramp generator (1) for generation of a sawtooth voltage, a comparison circuit (4) with two inputs which are supplied with the control voltage and the sawtooth voltage, respectively, a trigger circuit (5) whose input is connected to the output of the comparison circuit (4), and a triac (6) which is connected in series with the electric motor (7), the control electrode of said triac (6) being connected with the trigger circuit, **characterized** in that the output of the comparison circuit is connected to a control input on the ramp generator (1), said generator being arranged to give a steep ramp when the output status of the comparison circuit is at low level and a slightly less inclined ramp when the output status of the comparison circuit is at high level.

## Ansprüche

1. Eine Schaltung zum Regeln der Geschwindigkeit eines Elektromotors, insbesondere eines Spaltpolmotors, im Zusammenhang mit einer Steuerspannung, wobei die Schaltung einen Sägezahngenerator (1) zur Erzeugung einer Sägezahnspannung, eine Vergleichsschaltung (4) mit zwei Eingängen, die mit der Steuerspannung bzw. der Sägezahnspannung gespeist werden, einer Triggerschaltung (5), deren Eingang mit dem Ausgang der Vergleichsschaltung (4) verbunden ist, und einen Triac (6), der in Serie mit dem Elektromotor (7) verbunden ist, aufweist, und die Steuerelektrode des Triacs (6) mit der Triggerschaltung verbunden ist, dadurch gekennzeichnet, daß der Ausgang der Vergleichsschaltung mit einem Steuereingang des Sägezahngenerators (1) verbunden ist, wobei der Generator (10) eingerichtet ist, um eine steile Rampe zu erzeugen, wenn sich der Ausgangstatus der Vergleichsschaltung auf niedrigem Niveau befindet, und um eine etwas weniger geneigte Rampe zu erzeugen, wenn sich der Ausgangsstatus der Vergleichsschaltung auf hohem Niveau befindet.

## Revendications

1. Circuit de commande pour régler la vitesse d'un moteur électrique, en particulier du type à bague de déphasage, en fonction d'une tension de commande, comportant un générateur d'impulsions (1) pour produire une tension en dents de scie, un circuit de comparaison (4) ayant deux entrées auxquelles sont appliquées respectivement la tension de commande et la tension en dents de scie, un circuit de déclenchement (5) dont l'entrée est reliée à la sortie du circuit de comparaison (4) et un thyristor (6) qui est branché en série avec le moteur électrique (7), l'électrode de commande de ce thyristor (6) étant reliée au circuit de déclenchement, caractérisé en ce que la sortie du circuit de comparaison est reliée à une entrée de commande du générateur d'impulsions (1), ce générateur étant agencé de manière à produire des impulsions à pente raide lorsque l'état de la sortie du circuit de comparaison est à un niveau bas, et à produire des impulsions à pente légèrement plus faible lorsque l'état de la sortie du circuit de comparaison est à un niveau élevé.

*Fig.1*

PROPORTIONING COMPARISON SIGNAL

SENSED ROOM TEMPERATURE

AVERAGE LOAD POWER

LOAD POWER  ON  OFF

*Fig.2*

Fig. 3

Temp

PROPORTIONING
COMPARISON SIGNAL

SENSED ROOM
TEMPERATURE

AVERAGE LOAD
POWER

LOAD
POWER

ON

OFF

T

T

T

Fig. 4